# EUROPEAN PATENT SPECIFICATION

(11) **EP 4 336 118 B1**
(45) Date of publication and mention of the grant of the patent: **29.04.2026**
(21) Application number: 23180720.7
(22) Date of filing: 21.06.2023
(51) Int. Cl.: F24H 1/10, F24H 9/02, F24H 9/12, F24H 9/14

(54) **WATER HEATING APPARATUS**
WASSERHEIZVORRICHTUNG
APPAREIL DE CHAUFFAGE D'EAU

(30) Priority: 06.09.2022 KR 20220112506
(43) Date of publication of application: 13.03.2024
(73) Proprietor: Kyungdong Navien Co., Ltd., Pyeongtaek-si, Gyeonggi-do 17704 (KR)
(72) Inventor: MOON, Chang Mo, 08217 Seoul (KR); AHN, Sung Jun, 08217 Seoul (KR); KIM, Jeong Woo, 08217 Seoul (KR)
(74) Representative: Meissner Bolte Partnerschaft mbB

(56) References cited:
- EP-A2- 1 213 547
- EP-A2- 2 453 157
- WO-A1-2020/161897
- DE-A1- 19 849 103
- DE-U1- 29 809 434
- JP-A- H08 303 872

## Description

### TECHNICAL FIELD

The present disclosure relates to a water heating apparatus.

### BACKGROUND

Boilers, which are widely used as heating and hot water facilities for general households, are classified according to various criteria such as a use fuel for heating heating water, a heat source, and a position of a burner. That is, the boilers are classified into an oil boiler and a gas boiler according to the use fuel, the oil boiler uses diesel or kerosene as a fuel, and the gas boiler uses a liquefied petroleum gas (LPG) or a liquefied natural gas (LNG) as a fuel.

Among them, in the case of some boilers, a product is mainly installed on the floor. Thus, a pipe is mainly positioned on a side surface, pipes should be formed on both a left side surface and a right side surface of the product for dealer inventory management and easy installation.

Thus, in the related art, in the case of a boiler installed on the floor, a left type and a right type are separately produced or a pipe in the form, in which both ends are open so that water may be introduced or discharged through both the left side surface and the right side surface and the ends are in contact with the left side surface and the right side surface, is applied and then one end is blocked.

Meanwhile, when the left type and the right type are separately produced, both types should be produced, which is disadvantageous in terms of inventory management, and when an installation position is changed, the pipe needs to be disassembled, and in this process, leakage may occur due to carelessness of a worker.

Further, when a pipe is formed so that the water may be introduced or discharged through both left and right sides, unused portions are generated, and thus costs are wasted.

Document EP 1 213 547 A2 discloses a water heating apparatus comprising the features of the preamble of claim 1. Further water heating apparatuses with configurable adapters are known from documents

DE 198 49 103 A1 and DE 298 09 434 U1.

### SUMMARY

The present disclosure has been made to solve the above-mentioned problems occurring in the prior art while advantages achieved by the prior art are maintained intact.

An aspect of the present disclosure provides a water heating apparatus having improved workability when an installation position is changed by conveniently changing arrangement of a pipe for movement of water.

The technical problems to be solved by the present disclosure are not limited to the aforementioned problems, and any other technical problems not mentioned herein will be clearly understood from the following description by those skilled in the art to which the present disclosure pertains.

According to the present disclosure, a water heating apparatus includes a case having an internal space, a burner that is disposed inside the case and burns a fuel, a combustion chamber in which the burning is performed by the burner, a heat exchanger that exchanges heat generated through the burning by the burner, a return water flow path which is connected to the heat exchanger and in which water flows, and a return water adapter of which one end is connected to a lower end of the return water flow path, wherein the return water adapter is rotatably coupled to the lower end of the return water flow path.

According to the invention, the water heating apparatus further includes a return water pipe of which one end is connected to the other end of the return water adapter, which is formed to be inserted into and extracted from the return water adapter, and in which a length of an area overlapping the return water adapter is changed, and a return water nipple connected to the other end of the return water pipe, being in contact with an inner wall of the case, and inserted into a return water opening formed in the case.

As another example, the return water adapter may include an adapter body, and a protrusion area protruding outward from the adapter body, and the protrusion area may include a first protrusion area having a shape extending in a predetermined direction, and a second protrusion area having a shape crossing the first protrusion area.

According to the invention, the case includes a first wall connecting an upper wall and a lower wall, and a second wall spaced apart from the first wall, the return water opening may include a first opening formed in the first wall, and a second opening formed in the second wall, and the return water nipple may be inserted into any one of the first opening and the second opening.

As yet another example, the water heating apparatus may further include a cover part that is inserted into the other one of the first opening and the second opening and covers the other one thereof.

As yet another example, the first opening and the second opening may have shapes corresponding to each other.

As yet another example, the return water adapter may include a first part which extends in an up-down direction and of which an upper end is connected to the return water flow path, and a second part extending from a lower end of the first part in a direction crossing the up-down direction.

As yet another example, the first part may include a first area having an inner diameter corresponding to an outer diameter of the lower end of the return water flow path, and a second area disposed above the first area and having an inner diameter greater than the inner diameter of the first area.

As yet another example, a portion of an area of the return water flow path, which corresponds to an up-down position of the second area, may have an outer diameter corresponding to the inner diameter of the second area.

As yet another example, when a direction from the return water pipe to the return water nipple is referred to as a reference direction, a first sealing member in contact with an inner surface of the return water adapter and an outer surface of the return water pipe and a first support member formed to surround the return water pipe and positioned in the first sealing member in the reference direction may be formed at one end of the return water pipe.

As yet another example, when a direction from the return water pipe to the return water nipple is referred to as a reference direction, a second sealing member in contact with an inner surface of the return water nipple and an outer surface of the return water pipe and a second support member formed to surround the return water pipe and positioned in the second sealing member in a direction opposite to the reference direction may be formed at the other end of the return water pipe.

As yet another example, the water heating apparatus may further include a first fastening member that fastens the return water flow path and the return water adapter to each other, wherein a first groove recessed in a circumferential direction is formed on in outer surface of an area of the return water flow path, which overlaps the return water adapter, the return water adapter includes a first slot formed at a position corresponding to the first groove and open in a first direction perpendicular to an up-down direction, and the first fastening member has an area simultaneously inserted into the first groove and the first slot and extending in the first direction to rotatably couple the return water adapter and the return water flow path to each other.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating a state in which components of a water heating apparatus according to an embodiment of the present disclosure are arranged so that return water is introduced from a right side;
FIG. 2 is a view illustrating a state in which the components of the water heating apparatus according to the embodiment of the present disclosure are arranged so that return water is introduced from a left side;
FIGS. 3 to 6 are views sequentially illustrating a state in which a return water introduction position of the water heating apparatus is changed from the right side to the left side;
FIG. 7 is a perspective view illustrating a return water adapter;
FIG. 8 is a cross-sectional view of a return water pipe and a return water nipple; and
FIG. 9 is a cross-sectional view of a return water flow path and a first part.

### DETAILED DESCRIPTION

Hereinafter, some embodiments of the present disclosure will be described in detail with reference to the exemplary drawings. In adding reference numerals to components of each drawing, it should be noted that identical or equivalent components are designated by an identical numeral even when they are displayed on other drawings. Further, in describing the embodiment of the present disclosure, a detailed description of the related known configuration or function will be omitted when it is determined that it interferes with the understanding of the embodiment of the present disclosure.

In the present specification, a front-rear direction, a left-right direction, and an up-down direction are referred to for convenience of description and may be directions perpendicular to each other. However, this direction is determined relative to a direction in which a water heating apparatus is disposed, and the up-down direction may not necessarily refer to a vertical direction.

The water heating apparatus according to an embodiment of the present disclosure may be, for example, an oil boiler. However, the present disclosure is not limited thereto, and the water heating apparatus may have various modifications as long as the apparatus may heat water. Further, the water heating apparatus according to the embodiment of the present disclosure may be a water heating apparatus which may change an introduction direction of return water. Hereinafter, the return water may refer to water that is discharged from the water heating apparatus, circulates in a heating area such as a room, and is then introduced into the water heating apparatus again.

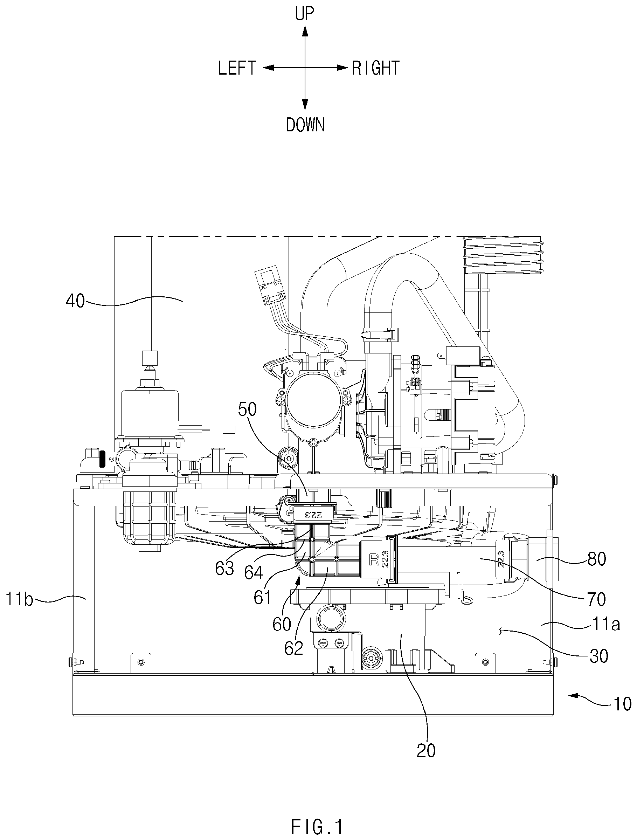

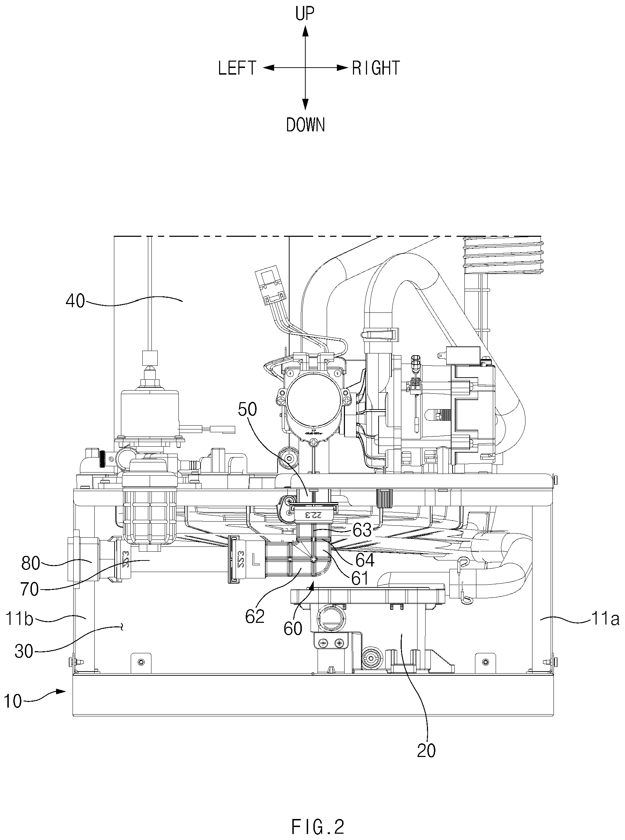

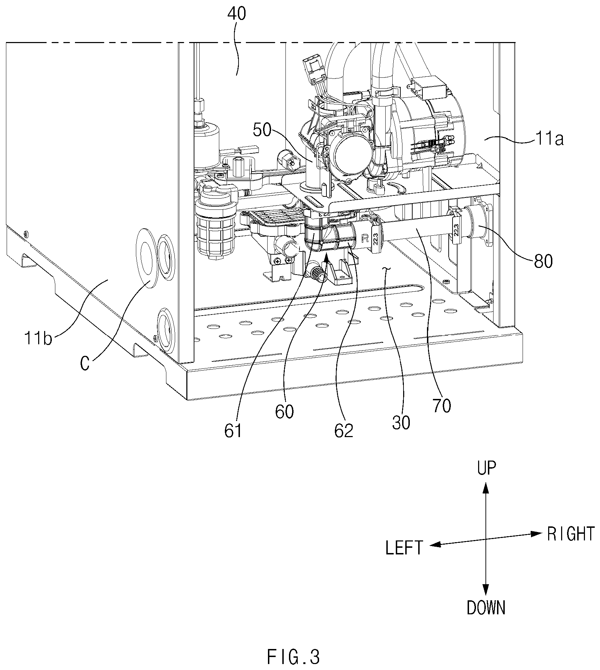

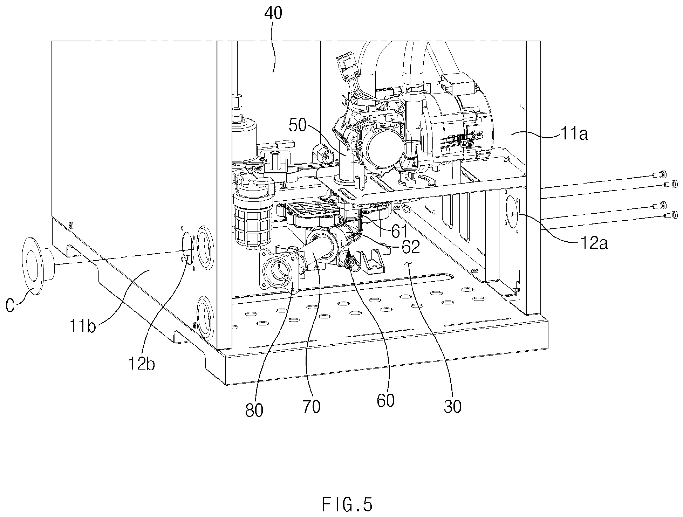

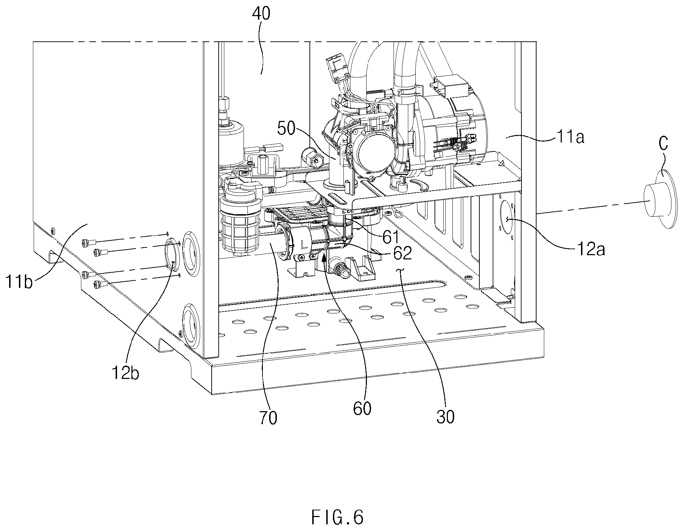

FIG. 1 is a view illustrating a state in which components of a water heating apparatus according to an embodiment of the present disclosure are arranged so that return water is introduced from a right side. FIG. 2 is a view illustrating a state in which the components of the water heating apparatus according to the embodiment of the present disclosure are arranged so that return water is introduced from a left side. FIGS. 3 to 6 are views sequentially illustrating a state in which a return water introduction position of the water heating apparatus is changed from the right side to the left side.

As illustrated in FIG. 1, the water heating apparatus according to the embodiment of the present disclosure may include a case 10, a burner (not illustrated), a combustion chamber (not illustrated), a heat exchanger 40, and a return water flow path 50. The case 10 may have an internal space 30. A condensate trap 20 may be disposed in the internal space 30. Further, a return water adapter 60 and a return water pipe 70, which will be described below, may be also disposed in the internal space 30.

The burner (not illustrated) may be disposed inside an upper side of the case 10 and provided to burn a fuel. The fuel may be oil, but the present disclosure is not limited thereto. Combustion may be performed by the burner (not illustrated) in the combustion chamber (not illustrated).

The heat exchanger 40 may be provided to exchange heat generated through the combustion by the burner (not illustrated). The heat exchanger 40 may generate hot water and heating water through the heat exchange. The heat exchanger 40 may also perform the heat exchange only using sensible heat of a heat source generated from fuel combustion and also perform the heat exchange by condensation latent heat generated from the sensible heat exchanger 40.

The return water flow path 50 may be connected to the heat exchanger 40 and water may flow therein. The return water having circulated in the heating area of the room may be introduced into the heat exchanger 40 through the return water flow path 50.

The water heating apparatus according to the embodiment of the present disclosure may further include the return water adapter 60. One end of the return water adapter 60 may be connected to a lower end of the return water flow path 50. In more detail, the return water adapter 60 may be rotatably coupled to the lower end of the return water flow path 50.

As an example, the return water adapter 60 may include a first part 61 and a second part 62. The first part 61 may be a part vertically extending and having an upper end connected to the return water flow path 50. The second part 62 may be a part that extends from a lower end of the first part 61 in a direction that crosses the up-down direction. Overall, the return water adapter 60 may have a shape similar to an "L" shape.

According to the present disclosure, arrangement of a pipe into which the return water is introduced may be freely changed through the return water adapter 60 rotatably coupled to the return water flow path 50, and thus when an installation position is changed, workability may be improved.

Meanwhile, when the return water adapter 60 may rotate, and when a length of the pipe connected to the return water adapter 60 is constant, an end of the pipe is caught by an inner wall of the case 10, and thus the rotation of the return water adapter 60 may be difficult. Hereinafter, a structure that may prevent this phenomenon will be described in detail.

The water heating apparatus according to the embodiment of the present disclosure may further include the return water pipe 70. The return water pipe 70 may be connected to the other end of the return water adapter 60. That is, one end of the return water adapter 60 may be connected to the return water flow path 50, and the other end thereof may be connected to the return water pipe 70.

The return water pipe 70 may be formed to be inserted into or extracted from the return water adapter 60. This may mean that a length of an area in which the return water pipe 70 overlaps the return water adapter 60 may change. As an example, an outer diameter of the return water pipe 70 may be formed to be smaller than an inner diameter of the other end of the return water adapter 60.

According to the present disclosure, since the return water pipe 70 may be inserted into and extracted from the return water adapter 60, when the return water adapter 60 rotates, the return water pipe 70 is inserted into the return water adapter 60, and thus a problem that an end of the pipe connected to the return water adapter 60 is caught by the inner wall of the case 10 may be solved.

Meanwhile, a material of the return water pipe 70 may be formed of a stainless material. However, the present disclosure is not limited thereto, and the material may be replaced with various materials.

The water heating apparatus according to the embodiment of the present disclosure may further include a return water nipple 80. The return water nipple 80 may be connected to the other end of the return water pipe 70. That is, one end of the return water pipe 70 may be connected to the return water adapter 60, and the other end thereof may be connected to the return water nipple 80. The return water nipple 80 may be in contact with the inner wall of the case 10 and may be inserted into a return water opening formed in the case 10. The return water having been introduced through the return water nipple 80 may pass through the return water pipe 70, may be introduced into the return water adapter 60, and may flow to the return water flow path 50.

The case 10 may include a first wall 11a and a second wall 11b. The first wall 11a may be a wall that connects an upper wall and a lower wall. The second wall 11b may be a wall that spaced apart from the first wall 11a. Based on FIG. 3, the first wall 11a may be a right wall, and the second wall 11b may be a left wall.

The return water opening may include a first opening 12a and a second opening 12b. The first opening 12a may be formed in the first wall 11a. The second opening 12b may be formed in the second wall 11b. The first opening 12a and the second opening 12b may have shapes corresponding to each other. Further, the first opening 12a and the second opening 12b may be placed in parallel positions in the left-right direction with reference to FIG. 3. The return water nipple 80 may be inserted into any one of the first opening 12a and the second opening 12b.

The water heating apparatus may further include a cover part "C". The cover part "C" may be inserted into the other one of the first opening 12a and the second opening 12b to cover the other one.

### <Return Water Introduction Position Change Method>

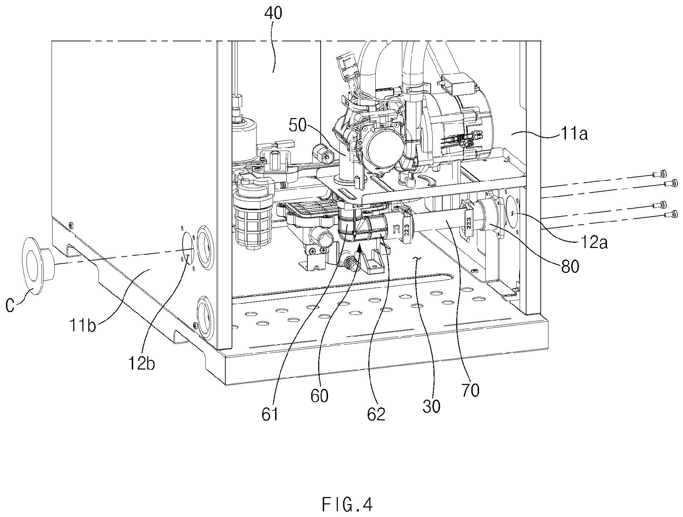

Hereinafter, a process of changing a position into which the return water is introduced according to an embodiment of the present disclosure will be described in detail with reference to FIGS. 3 to 6. This may be a process from FIG. 3 via FIGS. 4 and 5 to FIG. 6 or a process reverse thereto.

First, the return water nipple 80 coupled to any one of the first wall 11a and the second wall 11b is separated from the any one of the first wall 11a and the second wall 11b.

Second, the return water pipe 70 is inserted into the return water adapter 60. In this process, a length of a portion in which the return water pipe 70 and the return water adapter 60 overlap each other may increase, and a length of a portion of the return water pipe 70, which does not overlap the return water adapter 60, may decrease.

Third, the return water adapter 60 rotates about the up-down direction.

Finally, the return water pipe 70 is extracted again, and the return water nipple 80 is coupled to the other one of the first wall 11a and the second wall 11b.

### <Adapter Rigidity Secured Structure>

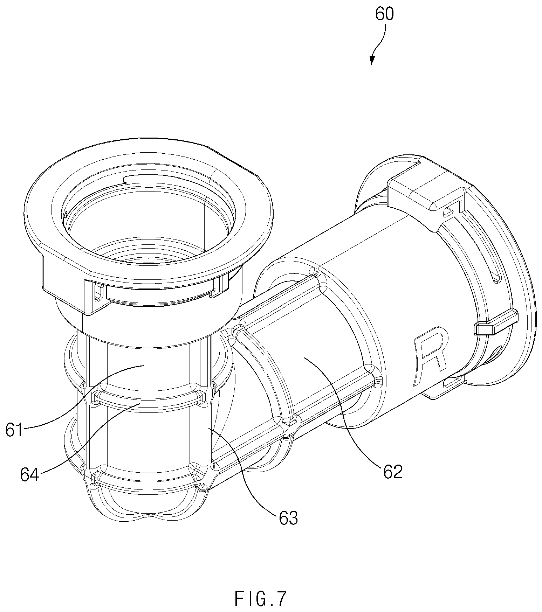

FIG. 7 is a perspective view illustrating a return water adapter. Meanwhile, since the return water adapter 60 according to the embodiment of the present disclosure is rotatably coupled to the return water flow path 50, the rigidity should be secured so that the return water adapter 60 is not damaged. Hereinafter, a structure for securing the rigidity of the return water adapter 60 will be described in detail with reference to FIG. 7.

The return water adapter 60 may include an adapter body and a protrusion area. The protrusion area may be an area protruding outward from the adapter body. As an example, the protrusion area may protrude outward from at least one of the first part 61 and the second part 62.

In this case, the protrusion area may include a first protrusion area 63 and a second protrusion area 64. The first protrusion area 63 may have a shape that extends in a predetermined direction. The second protrusion area 64 may have a shape crossing the first protrusion area 63. As an example, the first protrusion area 63 formed in the first part 61 may have a shape that extends in the up-down direction, and the second protrusion area 64 formed in the first part 61 may have a shape that extends to be perpendicular to the first protrusion area 63. Based on when the first part 61 has a cylindrical shape, the first protrusion area 63 and the second protrusion area 64 formed in the first part 61 may have a shape that protrudes radially outward from the first part 61. Further, the second protrusion area 64 may have a shape that extends in a circumferential direction of the first part 61.

As still another example, the first protrusion area 63 formed in the second part 62 may have a shape that extends in an extension direction of the second part 62, and the second protrusion area 64 formed in the second part 62 may have a shape that extends to be perpendicular to the first protrusion area 63. Based on when the second part 62 has a cylindrical shape, the first protrusion area 63 and the second protrusion area 64 formed in the second part 62 may have a shape that protrudes radially outward from the second part 62. Further, the second protrusion area 64 may have a shape that extends in a circumferential direction of the second part 62.

Further, the first protrusion area 63 may be provided as a plurality of first protrusion areas 63, which may be spaced apart from each other in the circumferential direction of the first part 61 or the second part 62. The second protrusion area 64 may also be provided as a plurality of second protrusion areas 64, which may be spaced apart from each other in the up-down direction or the extension direction of the second part 62. Due to the existence of the protrusion area, the rigidity of the adapter body may be reinforced.

Meanwhile, a character for displaying an assembly direction may be disposed on an outer surface of the return water adapter 60. As an example, when the water adaptor 60 is installed in the first wall 11a, the pipe is connected to the right wall, and thus a character "R" is displayed on a surface visible to a worker, and in an opposite case, a character "L" is disposed on the surface. Thus, the worker may perform the installation without confusion during work.

### <Airtight Member Removal Prevention Structure>

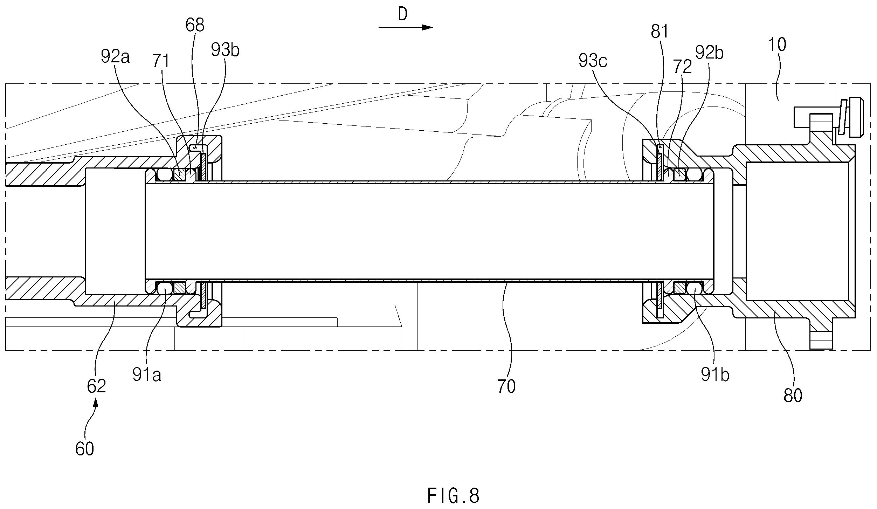

FIG. 8 is a cross-sectional view of the return water pipe 70 and the return water nipple 80. In a process of inserting the return water pipe 70 into the return water adapter 60, an airtight member such as an O-ring, through which sealing is maintained between the return water pipe 70 and the return water adapter 60, may be removed. Hereinafter, a structure that may prevent such removal will be described in detail with reference to FIG. 8.

A first sealing member 91a and a first support member 92a may be arranged at the one end of the return water pipe 70. The first sealing member 91a may be in contact with an inner surface of the return water adapter 60 and an outer surface of the return water pipe 70. The first sealing member 91a may be an O-ring. The first support member 92a may be formed to surround the return water pipe 70 and positioned in a reference direction "D" of the first sealing member 91a. The reference direction "D" may be a direction from the return water pipe 70 toward the return water nipple 80.

According to the present disclosure, since the first support member 92a prevents the first sealing member 91a from moving in the reference direction "D", the first sealing member 91a may be prevented from being removed while the return water pipe 70 is inserted into the return water adapter 60.

Meanwhile, a second sealing member 91b and a second support member 92b may be arranged at the other end of the return water pipe 70. The second sealing member 91b may be in contact with an inner surface of the return water nipple 80 and the outer surface of the return water pipe 70. The second support member 92b may be formed to surround the return water pipe 70 and positioned in a direction opposite to the reference direction "D" of the second sealing member 91b.

### <Falling Prevention Structure during Rotation>

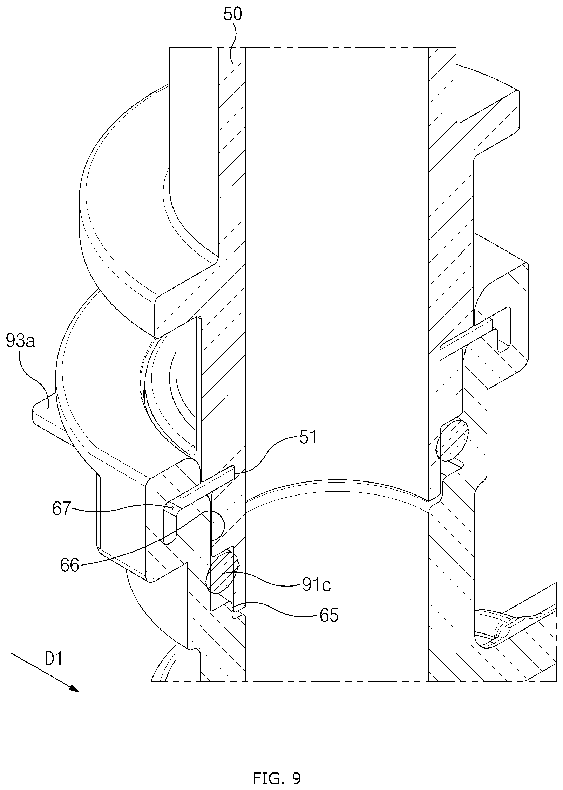

FIG. 9 is a cross-sectional view of the return water flow path 50 and the first part 61. Hereinafter, a structure for preventing a position of a central axis from being twisted when the return water adapter 60 rotates will be described in detail with reference to FIG. 9. The first part 61 may include a first area 65 and a second area 66. The first area 65 may have an inner diameter corresponding to an outer diameter of a lower end of the return water flow path 50. The second area 66 may be positioned above the first area 65 and may have an inner diameter that is greater than an inner diameter of the first area 65. That is, when viewed based on the inner diameter, the first part 61 may have a shape that is stepped along a lower side. A third sealing member 91c for sealing may be disposed in a space formed due to this step.

Meanwhile, a portion of an area of the return water flow path 50, which corresponds to an up-down position of the second area 66, may have an outer diameter corresponding to an inner diameter of the second area 66. That is, as a whole, a lower portion of the return water flow path 50 may have a shape stepped along the lower side based on the outer diameter.

According to the present disclosure, due to a structure of the lower portion of the return water flow path 50 having a shape stepped along the lower side and the return water adapter 60 corresponding thereto, at least two points are present at different distances spaced apart in a radial direction from the central axis that is a center of rotation. Thus, as compared to a case in which no points are present at different distances spaced apart from the central axis in the radial direction, the central axis may be prevented from being twisted in a direction crossing the up-down direction.

Continuously, referring to FIG. 9, the water heating apparatus may further include a first fastening member 93a that fastens the return water flow path 50 and the return water adapter 60 to each other. The first fastening member 93a may be an L clip. Meanwhile, a second fastening member 93b that fastens the return water adapter 60 and the return water pipe 70 may be disposed near the first support member 92a. Further, a third fastening member 93c that fastens the return water pipe 70 and the return water nipple 80 may be disposed near the second support member 92b. The second fastening member 93b and the third fastening member 93c may be L clips.

The return water flow path 50 may include a first groove 51. The first groove 51 may be recessed in a circumferential direction in an outer surface of an area of the return water flow path 50, which overlaps the return water adapter 60.

The return water adapter 60 may have a first slot 67. The first slot 67 may be formed at a position corresponding to the first groove 51 and may be open in a first direction D1 perpendicular to the up-down direction.

The first fastening member 93a may be simultaneously inserted into the first groove 51 and the first slot 67 and thus may rotatably couple the return water adapter 60 and the return water flow path 50 to each other. To this end, the first fastening member 93a may have an area that extends in the first direction D1.

The return water adapter 60 may include a second slot 68. The second fastening member 93b may be inserted into the second slot 68. The second fastening member 93b may prevent the one end of the return water pipe 70 from moving in the reference direction "D".

As an example, a first protrusion area 71 that protrudes radially outward may be formed on a side of the first support member 92a in the reference direction "D" among the one end of the return water pipe 70, and the second fastening member 93b may be disposed on a side of the first protrusion area 71 in the reference direction "D". The first protrusion area 71 may prevent movement of the first support member 92a in the reference direction "D".

The return water nipple 80 may include a third slot 81. The third fastening member 93c may be inserted into the third slot 81. The third fastening member 93c may prevent the other end of the return water pipe 70 from moving in the direction opposite to the reference direction "D".

As an example, a second protrusion area 72 that protrudes radially outward may be formed on a side of the second support member 92b in the direction opposite to the reference direction "D" among the other end of the return water pipe 70, and the third fastening member 93c may be disposed on a side of the second protrusion area 72 in the direction opposite to the reference direction "D". The second protrusion area 72 may prevent movement of the second support member 92b in the direction opposite to the reference direction "D".

According to the present disclosure, since an adapter is rotatably coupled to a return water flow path, an installation position may be changed without disassembly, and thus workability may be improved.

## Claims

1. A water heating apparatus comprising:
a case having an internal space;
a burner disposed inside the case and configured to burn a fuel;
a combustion chamber in which the burning is performed by the burner;
a heat exchanger configured to exchange heat generated through the burning by the burner;
a return water flow path which is connected to the heat exchanger and in which water flows;
a return water adapter of which one end is connected to a lower end of the return water flow path, **characterized in that** the water heating apparatus further comprises
a return water pipe of which one end is connected to the other end of the return water adapter, which is formed to be inserted into and extracted from the return water adapter, and in which a length of an area overlapping the return water adapter is changed, and
a return water nipple connected to the other end of the return water pipe, being in contact with an inner wall of the case, and inserted into a return water opening formed in the case,
wherein the return water adapter is rotatably coupled to the lower end of the return water flow path,
wherein the case includes:
a first wall connecting an upper wall and a lower wall; and
a second wall spaced apart from the first wall,
wherein the return water opening includes:
a first opening formed in the first wall; and
a second opening formed in the second wall, and
wherein the return water nipple is inserted into any one of the first opening and the second opening.

2. The water heating apparatus of claim 1, wherein the return water adapter includes:
an adapter body; and
a protrusion area protruding outward from the adapter body, and
the protrusion area includes:
a first protrusion area having a shape extending in a predetermined direction; and
a second protrusion area having a shape crossing the first protrusion area.

3. The water heating apparatus of claim 1, further comprising:
a cover part inserted into the other one of the first opening and the second opening and configured to cover the other one thereof.

4. The water heating apparatus of claim 1, wherein the first opening and the second opening have shapes corresponding to each other.

5. The water heating apparatus of claim 1, wherein the return water adapter includes:
a first part which extends in an up-down direction and of which an upper end is connected to the return water flow path; and
a second part extending from a lower end of the first part in a direction crossing the up-down direction.

6. The water heating apparatus of claim 5, wherein the first part includes:
a first area having an inner diameter corresponding to an outer diameter of the lower end of the return water flow path; and
a second area disposed above the first area and having an inner diameter greater than the inner diameter of the first area.

7. The water heating apparatus of claim 6, wherein a portion of an area of the return water flow path, which corresponds to an up-down position of the second area, has an outer diameter corresponding to the inner diameter of the second area.

8. The water heating apparatus of claim 1, wherein, when a direction from the return water pipe to the return water nipple is referred to as a reference direction,
a first sealing member in contact with an inner surface of the return water adapter and an outer surface of the return water pipe and a first support member formed to surround the return water pipe and positioned in the first sealing member in the reference direction are formed at one end of the return water pipe.

9. The water heating apparatus of claim 1, wherein, when a direction from the return water pipe to the return water nipple is referred to as a reference direction,
a second sealing member in contact with an inner surface of the return water nipple and an outer surface of the return water pipe and a second support member formed to surround the return water pipe and positioned in the second sealing member in a direction opposite to the reference direction are formed at the other end of the return water pipe.

10. The water heating apparatus of claim 1, further comprising:
a first fastening member configured to fasten the return water flow path and the return water adapter to each other,
wherein a first groove recessed in a circumferential direction is formed on in outer surface of an area of the return water flow path, which overlaps the return water adapter,
the return water adapter includes a first slot formed at a position corresponding to the first groove and open in a first direction perpendicular to an up-down direction, and
the first fastening member has an area simultaneously inserted into the first groove and the first slot and extending in the first direction to rotatably couple the return water adapter and the return water flow path to each other.

## Patentansprüche

1. Wasserheizvorrichtung, umfassend:
ein Gehäuse mit einem Innenraum;
einen Brenner, der innerhalb des Gehäuses angeordnet und zum Verbrennen eines Brennstoffs ausgelegt ist;
eine Brennkammer, in der die Verbrennung durch den Brenner erfolgt;
einen Wärmetauscher, der zum Austausch der durch die Verbrennung durch den Brenner erzeugten Wärme ausgelegt ist;
einen Rücklaufwasserströmungsweg, der mit dem Wärmetauscher verbunden ist und in dem Wasser fließt;
einen Rücklaufwasseradapter, dessen eines Ende mit einem unteren Ende des Rücklaufwasserströmungswegs verbunden ist,
**dadurch gekennzeichnet, dass** die Wasserheizvorrichtung ferner umfasst:
eine Rücklaufwasserleitung, deren eines Ende mit dem anderen Ende des Rücklaufwasseradapters verbunden ist, das so ausgebildet ist, dass es in den Rücklaufwasseradapter eingeführt und aus diesem herausgezogen werden kann, und wobei die Länge eines Bereichs, der den Rücklaufwasseradapter überlappt, verändert wird, und
einen Rücklaufwasserausschluss, der mit dem anderen Ende der Rücklaufwasserleitung verbunden ist, mit einer Innenwand des Gehäuses in Kontakt steht und in eine im Gehäuse ausgebildete Rücklaufwasseröffnung eingeführt ist,
wobei der Rückwasseradapter drehbar mit dem unteren Ende des Rückwasserströmungswegs verbunden ist,
wobei das Gehäuse umfasst:
eine erste Wand, die eine obere Wand und eine untere Wand verbindet; und
eine zweite Wand, die von der ersten Wand beabstandet ist,
wobei die Rücklaufwasseröffnung umfasst:
eine erste Öffnung, die in der ersten Wand ausgebildet ist; und
eine zweite Öffnung, die in der zweiten Wand ausgebildet ist, und
wobei der Rücklaufwasserausschluss in die erste Öffnung oder die zweite Öffnung eingeführt ist.

2. Wasserheizvorrichtung nach Anspruch 1, wobei der Rücklaufwasseradapter umfasst:
einen Adapterkörper; und
einen Vorsprungsbereich, der aus dem Adapterkörper nach außen vorsteht, und
der Vorsprungsbereich umfasst:
einen ersten Vorsprungsbereich, der sich in einer vorbestimmten Richtung erstreckt; und
einen zweiten Vorsprungsbereich mit einer Form, die den ersten Vorsprungsbereich kreuzt.

3. Wasserheizvorrichtung nach Anspruch 1, die ferner umfasst:
ein Abdeckteil, das in die andere der ersten Öffnung und der zweiten Öffnung eingesetzt ist und so konfiguriert ist, dass es die andere davon abdeckt.

4. Wasserheizvorrichtung nach Anspruch 1, wobei die erste Öffnung und die zweite Öffnung einander entsprechende Formen aufweisen.

5. Wasserheizvorrichtung nach Anspruch 1, wobei der Rücklaufadapter umfasst:
ein erstes Teil, das sich in Auf-Ab-Richtung erstreckt und dessen oberes Ende mit dem Rücklaufwasserströmungsweg verbunden ist; und
ein zweites Teil, das sich von einem unteren Ende des ersten Teils in einer Richtung erstreckt, die die Auf-Ab-Richtung kreuzt.

6. Wasserheizvorrichtung nach Anspruch 5, wobei der erste Teil umfasst:
einen ersten Bereich mit einem Innendurchmesser, der dem Außendurchmesser des unteren Endes des Rücklaufwasserströmungswegs entspricht; und
einen zweiten Bereich, der über dem ersten Bereich angeordnet ist und einen Innendurchmesser aufweist, der größer ist als der Innendurchmesser des ersten Bereichs.

7. Wasserheizvorrichtung nach Anspruch 6, wobei ein Teil eines Bereichs des Rücklaufwasserströmungswegs, der einer Auf-Ab-Position des zweiten Bereichs entspricht, einen Außendurchmesser aufweist, der dem Innendurchmesser des zweiten Bereichs entspricht.

8. Wasserheizvorrichtung nach Anspruch 1, wobei, wenn eine Richtung von der Rücklaufwasserleitung zum Rücklaufwasseranschluss als Referenzrichtung bezeichnet wird,
ein erstes Dichtungselement, das mit einer Innenfläche des Rücklaufwasseradapters und einer Außenfläche der Rücklaufwasserleitung in Kontakt steht, und ein erstes Stützelement, das so ausgebildet ist, dass es die Rücklaufwasserleitung umgibt, und das in dem ersten Dichtungselement in der Referenzrichtung positioniert ist, an einem Ende der Rücklaufwasserleitung ausgebildet sind.

9. Wasserheizvorrichtung nach Anspruch 1, wobei, wenn eine Richtung von der Rücklaufwasserleitung zum Rücklaufwasserausschluss als Referenzrichtung bezeichnet wird,
ein zweites Dichtungselement, das mit einer Innenfläche des Rücklaufwasserausschlusss und einer Außenfläche der Rücklaufwasserleitung in Kontakt steht, und ein zweites Stützelement, das so ausgebildet ist, dass es die Rücklaufwasserleitung umgibt, und das in dem zweiten Dichtungselement in einer zur Referenzrichtung entgegengesetzten Richtung positioniert ist, an dem anderen Ende der Rücklaufwasserleitung ausgebildet sind.

10. Wasserheizvorrichtung nach Anspruch 1, die ferner umfasst:
ein erstes Befestigungselement, das so konfiguriert ist, dass es den Rückwasserströmungsweg und den Rückwasseradapter aneinander befestigt,
wobei eine erste, in Umfangsrichtung vertiefte Nut an der Außenfläche eines Bereichs des Rücklaufwasserströmungswegs ausgebildet ist, der den Rücklaufwasseradapter überlappt,
der Rücklaufwasseradapter einen ersten Schlitz aufweist, der an einer Position ausgebildet ist, die der ersten Nut entspricht, und in einer ersten Richtung senkrecht zu einer Auf-Ab-Richtung offen ist, und
das erste Befestigungselement einen Bereich aufweist, der gleichzeitig in die erste Nut und den ersten Schlitz eingeführt ist und sich in der ersten Richtung erstreckt, um den Rücklaufadapter und den Rücklaufwasserströmungsweg drehbar miteinander zu koppeln.

## Revendications

1. Appareil de chauffage d'eau comprenant :
un boîtier comportant un espace interne ;
un brûleur disposé à l'intérieur du boîtier et configuré pour brûler un combustible ;
une chambre de combustion dans laquelle la combustion est effectuée par le brûleur ;
un échangeur de chaleur configuré pour échanger la chaleur générée par la combustion effectuée par le brûleur ;
un chemin d'écoulement d'eau de retour est relié à l'échangeur de chaleur et dans lequel circule de l'eau ;
un adaptateur d'eau de retour dont une extrémité est reliée à une extrémité inférieure du chemin d'écoulement d'eau de retour,
**caractérisé en ce que** l'appareil de chauffage d'eau comprend en outre :
un tuyau d'eau de retour dont une extrémité est reliée à l'autre extrémité de l'adaptateur d'eau de retour, qui est formé pour être inséré dans et extrait de l'adaptateur d'eau de retour, et dans lequel une longueur d'une zone chevauchant l'adaptateur d'eau de retour est modifiée, et
un raccord de retour d'eau relié à l'autre extrémité du tuyau de retour d'eau, en contact avec une paroi interne du boîtier, et inséré dans une ouverture de retour d'eau formée dans le boîtier,
dans lequel l'adaptateur de retour d'eau est couplé de manière rotative à l'extrémité inférieure du chemin d'écoulement de retour d'eau,
dans lequel le boîtier comprend :
une première paroi reliant une paroi supérieure et une paroi inférieure ; et
une deuxième paroi espacée de la première paroi,
dans lequel l'ouverture de retour d'eau comprend :
une première ouverture formée dans la première paroi ; et
une deuxième ouverture formée dans la deuxième paroi, et
dans lequel le raccord de retour d'eau est inséré dans l'une quelconque des première et deuxième ouvertures.

2. L'appareil de chauffage à eau selon la revendication 1, dans lequel l'adaptateur de retour d'eau comprend :
un corps d'adaptateur ; et
une zone en saillie faisant saillie vers l'extérieur à partir du corps d'adaptateur, et
la zone en saillie comprend :
une première zone en saillie ayant une forme s'étendant dans une direction prédéterminée ; et
une deuxième zone en saillie ayant une forme qui croise la première zone en saillie.

3. L'appareil de chauffage à eau selon la revendication 1, comprenant en outre :
une partie de couvercle insérée dans l'autre de la première ouverture et de la deuxième ouverture et configurée pour recouvrir celle-ci.

4. L'appareil de chauffage à eau selon la revendication 1, dans lequel la première ouverture et la deuxième ouverture ont des formes correspondant l'une à l'autre.

5. L'appareil de chauffage à eau selon la revendication 1, dans lequel l'adaptateur de retour d'eau comprend :
une première partie qui s'étend dans une direction verticale et dont l'extrémité supérieure est reliée au chemin d'écoulement de l'eau de retour ; et
une deuxième partie s'étendant depuis une extrémité inférieure de la première partie dans une direction croisant la direction verticale.

6. L'appareil de chauffage à eau selon la revendication 5, dans lequel la première partie comprend :
une première zone ayant un diamètre intérieur correspondant au diamètre extérieur de l'extrémité inférieure du chemin d'écoulement de l'eau de retour ; et
une deuxième zone disposée au-dessus de la première zone et ayant un diamètre intérieur supérieur au diamètre intérieur de la première zone.

7. Appareil de chauffage d'eau selon la revendication 6, dans lequel une partie d'une zone du chemin d'écoulement de l'eau de retour, qui correspond à une position haut-bas de la deuxième zone, a un diamètre extérieur correspondant au diamètre intérieur de la deuxième zone.

8. L'appareil de chauffage à eau selon la revendication 1, dans lequel, lorsque la direction allant du tuyau d'eau de retour au raccord d'eau de retour est appelée direction de référence,
un premier élément d'étanchéité en contact avec une surface intérieure de l'adaptateur d'eau de retour et une surface extérieure du tuyau d'eau de retour, et un premier élément de support formé pour entourer le tuyau d'eau de retour et positionné dans le premier élément d'étanchéité dans la direction de référence sont formés à une extrémité du tuyau d'eau de retour.

9. L'appareil de chauffage à eau selon la revendication 1, dans lequel, lorsque la direction allant du tuyau d'eau de retour vers le raccord d'eau de retour est appelée direction de référence,
un deuxième élément d'étanchéité en contact avec une surface intérieure du raccord de retour d'eau et une surface extérieure du tuyau de retour d'eau, et un deuxième élément de support formé pour entourer le tuyau de retour d'eau et positionné dans le deuxième élément d'étanchéité dans une direction opposée à la direction de référence sont formés à l'autre extrémité du tuyau de retour d'eau.

10. L'appareil de chauffage d'eau selon la revendication 1, comprenant en outre :
un premier élément de fixation configuré pour fixer le chemin d'écoulement de l'eau de retour et l'adaptateur d'eau de retour l'un à l'autre,
dans lequel une première rainure en retrait dans une direction circonférentielle est formée sur la surface extérieure d'une zone du chemin d'écoulement de l'eau de retour, qui chevauche l'adaptateur d'eau de retour,
l'adaptateur d'eau de retour comprend une première fente formée à une position correspondant à la première rainure et ouverte dans une première direction perpendiculaire à une direction verticale, et
le premier élément de fixation comporte une zone insérée simultanément dans la première rainure et la première fente et s'étendant dans la première direction pour coupler de manière rotative l'adaptateur d'eau de retour et le chemin d'écoulement d'eau de retour l'un à l'autre.
